# EUROPEAN PATENT SPECIFICATION

(11) **EP 1 023 723 B1**
(45) Date of publication and mention of the grant of the patent: **02.05.2003**
(21) Application number: 98945866.6
(22) Date of filing: 04.09.1998
(51) Int. Cl.: G11B 7/24, C08J 7/12

(54) **AMORPHOUS HYDROGENATED AROMATIC THERMOPLASTIC SUBSTRATES WITH IMPROVED ADHESION**
AMORPHE, HYDRIERTE, AROMATISCHE, THERMOPLASTISCHE SUBSTRATE MIT VERBESSERTER HAFTUNG
SUBSTRATS AMORPHES, HYDROGENES, AROMATIQUES, THERMOPLASTIQUES AVEC ADHERENCE AMELIOREE

(30) Priority: 29.09.1997 US 60300 P
(43) Date of publication of application: 02.08.2000
(73) Proprietor: Dow Global Technologies Inc., Midland, Michigan 48674 (US)
(72) Inventor: HAHN, Stephen, F., Midland, MI 48642 (US); NEWSHAM, Mark, D., Midland, MI 48642 (US); LUTZ, William, G., Linwood, MI 48634 (US); LOPEZ, Leonardo, C., Midland, MI 48640 (US)
(74) Representative: Raynor, John
(86) International application number: US9818334
(87) International publication number: WO99017285

(56) References cited:
- EP-A- 0 124 140
- EP-A- 0 410 468
- EP-A- 0 410 879
- EP-A- 0 770 995
- CHEMICAL ABSTRACTS, vol. 118, no. 14, 5 April 1993 Columbus, Ohio, US; abstract no. 126201, TSUNASHIMA, K. , E.A.: "Amorphous polyolefin films" XP002086871 & JP 04 283245 A (TORAY INDUSTRIES INC.)
- CHEMICAL ABSTRACTS, vol. 90, no. 8, 19 February 1979 Columbus, Ohio, US; abstract no. 55913, KUWASHIMA, T.: XP002086872 & JP 53 115781 A (MITSUBISHI MONSANTO CHEMICAL CO)
- DATABASE WPI Derwent Publications Ltd., London, GB; AN 92-420071 XP002086873 & JP 04 315832 A (MITSUBISHI KASEI CORP.) , 6 November 1992
- PATENT ABSTRACTS OF JAPAN vol. 008, no. 164 (M-313), 28 July 1984 & JP 59 059492 A (DAINIPPON INK KAGAKU KOGYO KK), 5 April 1984

## Description

The present invention relates to amorphous saturated hydrocarbon thermoplastic substrates having improved adhesion properties.

Amorphous saturated hydrocarbon thermoplastics, such as polyvinylcyclohexane, have found uses in a variety of applications including multilayered or laminated articles such as optical disc media. Such multilayered or laminated articles typically comprise a layer of hydrogenated aromatic polymer and an additional layer of a metal or a polymeric material. However, previous attempts at applying metals or polymers to such hydrogenated aromatic polymer surfaces have resulted in poor adhesion.

EP-A-0770995 by Nebashi et al. discloses an optical disc comprising a disc shaped substrate with a cyclic olefin copolymer as its main component, and a light-curing resin layer that is formed on the disc shaped substrate, wherein a relief-and-indentation is formed on the heat-curing resin layer based on given information.

EP-A-0410468 by Suga et al. discloses fluorine treatment of a transparent hydrocarbon resin based substrate for an optical disc.

JP-4-335009 by Tanaka et al. discloses a hydrogenated hydroxyl-substituted styrene copolymer with increased adhesion to recording film layers. However, such copolymers are not commercially available and are typically obtained by an expensive multistep process.

JP-3-59833 by Kato et al. discloses a hydrogenated vinyl aromatic polymer optical disc substrate having improved adhesion by treating the substrate with a mixed solution of sulfuric acid and chromic acid, while JP-3-59832 by Kato et al. discloses a similar method using fuming nitric acid. However, these wet corrosive methods are hazardous and can lead to equipment degradation.

US-A-5,073,427 by Suga et al. discloses an optical disc surface treated with a fluorine-containing gas to improve adhesion to a recording layer formed thereon. However, this method is impractical since fluorine is toxic and corrosive, and hydrofluoric acid is produced as a byproduct.

Therefore, a need remains for amorphous saturated hydrocarbon thermoplastic substrates having enhanced adhesion properties, wherein the enhanced adhesion is obtained by an efficient and effective method without using or producing wet corrosive materials which causes equipment degradation.

The present invention is an amorphous hydrogenated aromatic thermoplastic polymer substrate having enhanced adhesion properties, wherein the hydrogenated aromatic thermoplastic polymer has been hydrogenated to a level of at least 80 percent aromatic hydrogenation and wherein the enhanced adhesion properties are obtained by treating the surface of the amorphous saturated hydrocarbon thermoplastic substrate with an excited gas phase technique, such that a critical surface energy of at least 35 dyne/cm is obtained, without the use of acids or other corrosive materials which cause equipment degradation.

Excited gas phase techniques allow for improved adhesion of a metal or polymer to the substrate without the use of corrosive or toxic materials which cause equipment degradation. Such methods are particularly beneficial in enhancing the adhesion of a metal to an optical media disc made of polycyclohexylethylene (PCHE).

The present invention is an amorphous hydrogenated aromatic thermoplastic polymer substrate having improved adhesion to a metal or polymeric material.

The discs of the present invention are produced from amorphous hydrogenated aromatic thermoplastics. The term hydrogenated refers to the amount of olefinic bonds within the chemical structure. As used herein, hydrogenated refers to a polymer wherein less than 10 percent of the carbon-carbon bonds are olefinic or unsaturated in nature, generally less than 7.5 percent, typically less than 5 percent, advantageously less than 2 percent, more advantageously less than 1.5 percent, preferably less than 1 percent, more preferably less than 0.5 percent and most preferably less than 0.2 percent.

Hydrogenated aromatic polymers include any polymeric material containing a pendant aromatic functionality which is subsequently hydrogenated. Pendant aromatic refers to a structure wherein the aromatic group is a substituent on the polymer backbone and not embedded therein. Preferred aromatic groups are C₆₋₂₀ aryl groups, especially phenyl. These polymers may also contain other olefinic groups in addition to the aromatic groups. Preferably, the polymer is derived from a monomer of the formula: 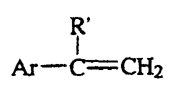 wherein R' is hydrogen or alkyl, Ar is phenyl, halophenyl, alkylphenyl, alkylhalophenyl, naphthyl, pyridinyl, or anthracenyl, wherein any alkyl group contains 1 to 6 carbon atoms which may be mono or multisubstituted with functional groups such as halo, nitro, amino, cyano, carbonyl and carboxyl. More preferably Ar is phenyl or alkyl phenyl with phenyl being most preferred. Typical vinyl aromatic monomers which can be used include styrene, alpha-methylstyrene, all isomers of vinyl toluene, especially paravinyltoluene, all isomers of ethyl styrene, propyl styrene, vinyl biphenyl, vinyl naphthalene, vinyl anthracene, and mixtures thereof. Homopolymers may have any stereostructure including syndiotactic, isotactic or atactic; however, atactic polymers are preferred. In addition, hydrogenated copolymers containing these aromatic monomers including random, pseudo random, block and grafted copolymers may be used in accordance with the present invention. For example, copolymers of vinyl aromatic monomers and comonomers selected from nitriles, acrylates, acids, ethylene, propylene, maleic anhydride, maleimides, vinyl acetate, and vinyl chloride may also be used such as styrene-acrylonitrile, styrene-alpha-methylstyrene and styrene-ethylene. Hydrogenated block copolymers of vinyl aromatic monomers and conjugated dienes such as butadiene, isoprene may also be used. Examples include styrene-butadiene, styrene-isoprene, styrene-butadiene-styrene and styrene-isoprene-styrene copolymers. Further examples of block copolymers may be found in U.S. patents 4,845,173, 4,096,203, 4,200,718, 4,210,729, 4,205,016, 3,652,516, 3,734,973, 3,390,207, 3,231,635, and 3,030,346. Blends of such hydrogenated polymers with other polymers including impact modified, grafted rubber containing aromatic polymers may also be used. Preferably, the hydrogenated aromatic polymer is polyvinylcyclohexane (PVCH) prepared by hydrogenating atactic polystyrene as described in US-A-5,700,878.

The weight average molecular weight (Mw) of the aromatic polymers which are hydrogenated is typically from 10,000 to 3,000,000, more preferably from 100,000 to 1,000,000, and most preferably from 100,000 to 500,000.

The hydrogenated polymers useful in the present invention include any hydrogenated polymer as described above, which has been hydrogenated to a level of at least 80 percent aromatic hydrogenation, generally at least 85 percent, typically at least 90 percent, advantageously at least 95 percent, more advantageously at least 98 percent, preferably at least 98 percent, more preferably at least 99.5 percent, and most preferably at least 99.8 percent. Methods of hydrogenating aromatic polymers are well known in the art such as that described in U.S. 5,700,878 by Hahn and Hucul, wherein aromatic polymers are hydrogenated by contacting the aromatic polymer with a hydrogenating agent in the presence of a silica supported metal hydrogenation catalyst having a narrow pore size distribution and large pores.

The hydrogenated aromatic polymers described above can be used in a variety of applications including various molded products such as optical media discs. Methods of molding are well known in the art and include compression and injection molding. Typically, the molding temperature is between 200 and 300°C, and is preferably between 260 and 300°C.

In order to enhance the adhesion of the amorphous hydrogenated aromatic thermoplastic substrate, the surface of the molded substrate is treated using an excited gas-phase technique such that the critical surface energy is at least 35, typically at least 38, generally at least 40, preferably at least 43, more preferably at least 45 and most preferably at least 50 dynes/cm to 85, preferably 80, more preferably 75, and most preferably 70 dynes/cm. Critical surface energy is commonly determined by the interfacial relationship between a surface and a liquid (or gas), and is discussed in Physical Chemistry of Surfaces, Fifth Ed., by Arthur W. Adamson, Wiley-Interscience, New York, N.Y. 1990 and "interfacial Properties", by Jeffrey T. Koberstein, Encyclopedia of Polymer Science and Technology, 2^{nd} Edition, 1987, Volume 8 pp. 272-275.

Excited gas-phase techniques are well known in the art and include corona discharge, plasma, flame and ozone treatment. These techniques utilize a gaseous flow which is contacted with a high energy source such as high energy electrical discharge, shock waves, microwaves, lasers, and radio frequency. Upon contact with the high energy source, a number of relatively high energy ionic and radical species form within the gas are able to react with the polymer surface, changing the surface structure. These techniques allow for treatment of a very thin surface layer, such that the bulk properties of the polymer are not adversely affected. The nature of the gas, and the manner in which it is excited, can be used to control the level to which the surface is modified. Such methods are described in references such as "Reactions of Polyethylene Surfaces with the Downstream Products of an Air Plasma: Gas Phase and Surface Spectroscopic Studies", *Journal of Polymer Science: Part A: Polymer Chemistry*, Vol. 34, 2299-2310 (1996) by Kill, Hunter and Mcintyre, "Remote Nitrogen Plasma Treatment of Polymers: Polyethylene, Nylon 6,6, Poly(ethylene Vinyl Alcohol), and Poly(ethylene Terephthalate)", *Journal of Polymer Science: Part A: Polymer Chemistry,* Vol. 30, 279-286 (1992) by Foerch and Hunter, "E.s.c.a. studies of corona-discharge-treated polyethylene surfaces by use of gas-phase derivatization", *Polymer,* Vol. 26, 1162-1166, (1985) by Gerenser et al., and "ESCA Applied to Polymers. XXII. RF Glow Discharge Modification of Polymers in Pure Oxygen and Helium-Oxygen Mixtures", *Journal of Polymer Science:* Polymer Chemistry Edition, Vol. 17, 957-976 (1979) by Clark and Dilks.

A plasma is a collection of positively and negatively charged particles produced by exposing a gas to a high energy source under conditions such that molecules in the material are dissociated and ionized. Typically, a gas is used to form a plasma by subjecting it to a high energy electrical discharge, although other sources, for example shock waves, microwaves, lasers, etc. can also be used. The gas used to form the plasma is widely variable, and can include oxygen, nitrogen, argon, helium and ammonia. Typically, plasma treatment is conducted under vacuum using oxygen, nitrogen or argon as the gas. Plasma treatment is discussed in "Plasma Technology" Kirk-Othmer Encyclopedia of Chemical Technology, 3^{rd} Edition, Supplement, pp. 599, 1984 and "ESCA Applied to Polymers, XVIII. RF Glow Discharge Modification of Polymers in Helium, Neon, Argon and Krypton", D.T. Clark, A. Dilks, *Journal of Polymer Science: Polymer Chemistry Edition,* Vol. 16, pg. 911 (1978).

Corona treatment consists of passing a gaseous flow through a high energy electric arc, which creates high energy radicals and ionic species. When this corona treated gas contacts the polymer surface it can lead to reactions at the surface which change the structure of the surface. Whereas a plasma is a separate form of material, made up of dissociated ions, the corona simply creates some high energy species that then move with the gas flow. The gas used, the corona equipment, the time of exposure, and other factors can be used to control the extent to which the surface is modified. In addition, the chemical structure of the polymer surface controls the reactions which can occur and determines the structure of the surface thus prepared. Typically, the gases used in this method include oxygen, nitrogen, argon and air.

Flame treatment involves imposing a flame on the surface of the polymer.
The flame is a highly oxidizing environment involving a mixture of fuel and oxygen which creates a wide variety of excited state ionic and radical species. This strongly oxidizing environment can effect changes in the structure of the polymer surface.
The nature of the flame, the fuel source, the duration of exposure, and the structure of the polymer are variables which contribute to the structure of the end product.

Ozone treatment involves exposing the hydrogenated aromatic polymer substrate to ozone. Ozone (O₃) can be generated by a several methods such as treatment of air or oxygen with a corona or plasma, and the UV irradiation of air. These methods create ozone by cleaving diatomic oxygen (O₂) into oxygen atoms, which then combine with diatomic oxygen. Ozone generated in close proximity to the polymer surface can react with that surface and result in chemical modification. Ozone generation and treatments are further discussed in the Kirk-Othmer Encyclopedia of Chemical Technology, 3rd edition, Volume 16, 1981 (John Wiley & Sons).

The excited gas phase techniques are typically applied to the amorphous saturated hydrocarbon thermoplastic substrate for a sufficient time such that the surface chemistry is modified and enhanced adhesion is obtained. The amount of time necessary is dependent upon the materials involved, the excited gas phase technique, and the placement of the substrate.

The treated polymer substrates of the present invention have enhanced adhesion to other materials, such as metals and other polymers. Metals which are suitable for adhesion include any metal which is inert with the amorphous hydrogenated aromatic thermoplastic substrate such as rare earth transition metals, aluminum, copper, chromium, nickel, titanium, silver, gold and their alloys, gadolinium iron cobalt alloy, terbium iron titanium alloy, terbium iron cobalt titanium alloy, gadolinium terbium iron alloy, terbium iron cobalt alloy, terbium iron alloy, terbium iron cobalt alloy, gallium antimony alloy, indium antimony alloy, or quaternary alloys containing transition metals and rare earth elements. Preferably, the metal is aluminum. Multiple layers of metals can also be employed, such as a first layer of nickel and a second layer of copper. Other polymers may also be adhered to the surface of the amorphous hydrogenated aromatic thermoplastic substrate. Such polymers include any polymer which would have an affinity to the modified surface including thermoplastic and thermosetting polymers with an affinity to the modified surface such as polyesters, polycarbonates, polydimethylsiloxanes, polyamides (nylons), polyacrylates, polyurethanes, and mixtures thereof.

Other materials which may also be adhered to the surface of the treated polymer substrate include acrylic based lacquers such as Daicure™ Clear SD-211 and SD-217 available from Dainippon Ink and Chemicals, Inc., pigments, inks or dyes such as Irgaphorgreen CDR available from Ciba-Geigy, water based systems with low molecular weight polystyrene/acrylate polymers or maleic anhydride polymers, glues such as acrylatelepoxy glues, and ultra-violet curable acrylic resins.

Methods of applying metals and other polymer materials to the polymer substrate include any conventional method known in the art for such materials such as coating, sputtering, vacuum deposition, solvent deposition, vacuum evaporation, and wet silvering.

In one embodiment of the present invention, an adhesion enhanced PCHE optical media disc is obtained. The disc is molded using any typical molding technique which are well known in the art and described in The Compact Disc Handbook, 2nd edition, by Pohlmann. The surface of the disc is then modified by treatment with argon plasma and is then coated with a reflective layer of aluminum by cathode sputtering. Optical discs are useful as optical high density information recording medium such as compact discs, video discs, DVD discs, CD-rewritable discs, memory discs for computers, optical magnetic discs or optical cards.

The following examples are provided to illustrate the present invention. The examples are not intended to limit the scope of the present invention and they should not be so interpreted. Amounts are in weight parts or weight percentages unless otherwise indicated.

### EXAMPLES

Six compact discs are prepared by injection molded polycyclohexylethylene.

Disc 1 is a control which has not been surface treated wherein the disc substrate is characterized by X-ray photoelectron spectroscopy and contact angle analysis to determine surface composition and energy using the Zismann technique (water, formamide, ethylene glycol, and dimethylsulfoxide were used). This data is summarized in Table 1.

Disc 2 is a control which has not been surface treated, but is coated with a layer of aluminum using a vapor deposition process. The substrate to metal adhesion is determined via ASTM method D 3359. This data is shown in Table 2.

Disc 3 is treated using a Tegal 903e plasma etcher under the following conditions: argon atmosphere, 750 mTorr pressure, 100W rf power, for approximately 2 minutes. Surface energy and XPS analysis are performed immediately after plasma treatment and are given in Table 1.

Disc 4 is treated with an argon plasma under conditions identical with that described above, and is metallized with Al. The adhesion of the metal to substrate was tested via ASTM D 3359, and the data is given in Table 2.

Disc 5 is treated using a Tegal 903e plasma etcher under the following conditions: nitrogen atmosphere, 750 mTorr pressure, 500W rf power, for approximately 24 seconds. Surface energy and XPS analysis are performed immediately after plasma treatment and this data is given in Table 1.

Disc 6 is treated with a nitrogen plasma under conditions identical with that described above, and is metallized with Al. The adhesion of the metal to substrate was tested via ASTM D 3359, and the data is given in Table 2.

| Treatment | Critical Surface Energy (dynes/cm) | Contact Angle, H₂O | Percent Oxygen* | Percent Nitrogen* | Percent Carbon* |
|---|---|---|---|---|---|
| None **(Disc 1) | 22 | 98° | 0.3 | not detected | 99.7 |
| Ar plasma (Disc 3) | 44 | 75° | 5.6 | 4.1 | 89.4 |
| N₂ plasma (Disc 5) | 54 | 26° | 4.2 | 16.0 | 78.0 |

| | | | | | |
|---|---|---|---|---|---|
| *From XPS analysis, given as atom percent. This analysis reflects composition at the first 10nm of the substrate surface. | | | | | |
| **Comparative example with no surface treatment. | | | | | |

### Classification of adhesion test results:

Metallized CD discs are tested for metal/substrate adhesion by crosshatching the metal film and performing tape pull testing as per ASTM D 3359. The classifications of metal adhesion quality are described below.

| **Classification** | **Description** |
|---|---|
| 5B | The edges of the cuts are completely smooth; none of the squares of the lattice is detached. |
| 4B | Small flakes of the coating are detached at intersections; less than 5 percent of the area is affected. |
| 3B | Small flakes of the coating are detached along edges and at intersections of cuts. The area affected is 5 to 15 percent of the lattice. |
| 2B | The coating has flaked along the edges and on parts of the squares. The area affected is 15 to 35 percent of the lattice. |
| 1B | The coating has flaked along the edges of the cuts in large ribbons and whole squares have detached. The area affected is 35 to 65 percent of the lattice. |
| 0B | Flaking and detachment worse than Grade 1. |

Four tape pull tests were performed on each of the metallized disc forms.

**Table 2.**

| Adhesion of Aluminum to PCHE Substrate | |
|---|---|
| Treatment | Tape Pull Adhesion Results |
| control** (Disc 2) | 0B, 0B, 0B, 0B |
| Ar plasma (Disc 4) | 3B, 3B, 5B, 4B |
| N₂ plasma (Disc 6) | 5B, 4B, 0B, 4B |

| | |
|---|---|
| **Comparative example with no surface treatment. | |

The surface treatment of the polymer substrate significantly increases the adhesion to metal.

## Claims

1. An amorphous hydrogenated aromatic thermoplastic polymer substrate, wherein the hydrogenated aromatic thermoplastic polymer has been hydrogenated to a level of at least 80 percent aromatic hydrogenation, which has been treated by an excited gas phase technique, without using or producing wet corrosive materials, such that a critical surface energy of at least 35 dynes/cm is obtained.

2. The substrate of Claim 1 wherein the thermoplastic is selected from the group consisting of polycyclohexylethylene homo- or copolymers

3. The substrate of Claim 1 wherein the thermoplastic is polycyclohexylethylene.

4. The substrate of Claim 1 wherein the thermoplastic is a block copolymer of polycyclohexylethylene.

5. The substrate of Claim 1 which additionally comprises a metal adhered to the substrate surface.

6. The substrate of Claim 5 wherein the metal is selected from aluminum, chromium, nickel, titanium, silver, copper and gold.

7. The substrate of Claim 6 wherein the metal is aluminum.

8. The substrate of Claim 1 which additionally comprises a polymer adhered to the substrate surface.

9. The substrate of Claim 8 wherein the polymer is selected from the group consisting of a polyester, polycarbonate, polydimethylsiloxane, polyamide, polyacrylate, polyurethane and mixtures thereof.

10. The substrate of Claim 9 wherein the polymer is polycarbonate.

11. The substrate of Claim 1 wherein the excited gas phase technique is a corona discharge treatment.

12. The substrate of Claim 1 wherein the excited gas phase technique is a plasma treatment.

13. The substrate of Claim 1 wherein the excited gas phase technique is flame treatment.

14. The substrate of Claim 1 wherein the excited gas phase technique is ozone treatment.

15. The substrate of Claim 1 wherein the excited gas phase technique is a plasma treatment in argon and the substrate further comprises a layer of aluminum adhered to the surface of the hydrogenated aromatic polymer substrate.

16. The substrate of Claim 1 further comprising a metal layer adhered to the surface of the amorphous hydrogenated aromatic thermoplastic polymer substrate, wherein the metal layer is also adhered to another polymer layer, forming a amorphous hydrogenated aromatic thermoplastic/metal/polymer laminate.

17. A CD-audio disc prepared from the substrate of Claim 1.

18. A CD-ROM disc prepared from the substrate of Claim 1.

19. A DVD disc prepared from the substrate of Claim 1.

20. A CD rewritable disc prepared from the substrate of Claim 1.

21. A process of increasing the adhesion of an amorphous hydrogenated aromatic thermoplastic polymer substrate surface, wherein the hydrogenated aromatic polymer is hydrogenated to a level of at least 80 percent aromatic hydrogenation, comprising treating the surface with an excited gas phase technique, without using or producing wet corrosive materials, such that a critical surface energy of at least 35 dynes/cm is obtained.

22. The process of Claim 21 wherein the excited gas phase technique is a corona discharge treatment.

23. The process of Claim 21 wherein the excited gas phase technique is a plasma treatment.

24. The process of Claim 21 wherein the excited gas phase technique is flame treatment.

25. The process of Claim 21 wherein the excited gas phase technique is ozone treatment.

## Patentansprüche

1. Amorphes hydriertes aromatisches thermoplastisches Polymersubstrat, wobei das hydrierte aromatische thermoplastische Polymer bis zu einem Niveau von mindestens 80% aromatischer Hydrierung hydriert worden ist, das mit einer Technik der angeregten Gasphase behandelt worden ist, ohne feuchte korrosive Materialien zu verwenden oder zu erzeugen, so dass eine kritische Oberflächenenergie von mindestens 35 dyn/cm erhalten wird.

2. Substrat nach Anspruch 1, wobei der Thermoplast aus der Gruppe bestehend aus Polycyclohexylethylenhomo- oder -copolymeren ausgewählt ist.

3. Substrat nach Anspruch 1, wobei der Thermoplast Polycyclohexylethylen ist.

4. Substrat nach Anspruch 1, wobei der Thermoplast ein Blockcopolymer von Polycyclohexylethylen ist.

5. Substrat nach Anspruch 1, das weiterhin ein Metall aufweist, das an der Substratoberfläche anhaftet.

6. Substrat nach Anspruch 5, wobei das Metall aus Aluminium, Chrom, Nickel, Titan, Silber, Kupfer und Gold ausgewählt ist.

7. Substrat nach Anspruch 6, wobei das Metall Aluminium ist.

8. Substrat nach Anspruch 1, das weiterhin ein Polymer aufweist, das an der Substratoberfläche anhaftet.

9. Substrat nach Anspruch 8, wobei das Polymer ausgewählt ist aus der Gruppe bestehend aus einem Polyester, Polycarbonat, Polydimethylsiloxan, Polyamid, Polyacrylat, Polyurethan und Mischungen derselben.

10. Substrat nach Anspruch 9, wobei das Polymer Polycarbonat ist.

11. Substrat nach Anspruch 1, wobei die Technik der angeregten Gasphase eine Coronaentladungsbehandlung ist.

12. Substrat nach Anspruch 1, wobei die Technik der angeregten Gasphase eine Plasmabehandlung ist.

13. Substrat nach Anspruch 1, wobei die Technik der angeregten Gasphase eine Flammbehandlung ist.

14. Substrat nach Anspruch 1, wobei die Technik der angeregten Gasphase eine Ozonbehandlung ist.

15. Substrat nach Anspruch 1, wobei die Technik der angeregten Gasphase eine Plasmabehandlung in Argon ist und das Substrat weiterhin eine Schicht aus Aluminium aufweist, die an der Oberfläche des hydrierten aromatischen Polymersubstrats anhaftet.

16. Substrat nach Anspruch 1, das weiterhin eine Metallschicht aufweist, die an der Oberfläche des amorphen hydrierten aromatischen thermoplastischen Polymersubstrats anhaftet, wobei die Metallschicht auch an einer anderen Polymerschicht anhaftet und ein Laminat aus amorphem hydrierten aromatischen Thermoplast/Metall/Polymer gebildet wird.

17. CD-Audiodisk, die aus dem Substrat nach Anspruch 1 hergestellt ist.

18. CD-ROM-Disk, die aus dem Substrat nach Anspruch 1 hergestellt ist.

19. DVD-Disk, die aus dem Substrat nach Anspruch 1 hergestellt ist.

20. Überschreibbare CD-Disk, die aus dem Substrat nach Anspruch 1 hergestellt ist.

21. Verfahren zur Steigerung des Haftvermögens der Oberfläche eines amorphen hydrierten aromatischen thermoplastischen Polymersubstrats, wobei das hydrierte aromatische Polymer bis zu einem Niveau von mindestens 80% aromatischer Hydrierung hydriert worden ist, umfassend Behandeln der Oberfläche mit einer Technik der angeregten Gasphase, ohne feuchte korrosive Materialien zu verwenden oder zu erzeugen, so dass eine kritische Oberflächenenergie von mindestens 35 dyn/cm erhalten wird.

22. Verfahren nach Anspruch 21, wobei die Technik der angeregten Gasphase eine Coronaentladungsbehandlung ist.

23. Verfahren nach Anspruch 21, wobei die Technik der angeregten Gasphase eine Plasmabehandlung ist.

24. Verfahren nach Anspruch 21, wobei die Technik der angeregten Gasphase eine Flammbehandlung ist.

25. Verfahren nach Anspruch 21, wobei die Technik der angeregten Gasphase eine Ozonbehandlung ist.

## Revendications

1. Substrat polymère thermoplastique aromatique hydrogéné amorphe, dans lequel le polymère thermoplastique aromatique hydrogéné a été hydrogéné jusqu'à un degré d'au moins 80 pour cent d'hydrogénation aromatique, qui a été traité par une technique en phase gazeuse excitée, sans utilisation ni production de matières corrosives humides, de manière à obtenir une énergie superficielle critique d'au moins 35 dynes/cm.

2. Substrat selon la revendication 1, dans lequel le thermoplastique est choisi dans le groupe constitué d'homo ou de co-polymères de polycyclohexyléthylène.

3. Substrat selon la revendication 1, dans lequel le thermoplastique est le polycyclohexyléthylène.

4. Substrat selon la revendication 1, dans lequel le thermoplastique est un copolymère séquencé de polycyclohexyléthylène.

5. Substrat selon la revendication 1, qui comprend en outre un métal adhérant à la surface du substrat.

6. Substrat selon la revendication 5, dans lequel le métal est choisi parmi l'aluminium, le chrome, le nickel, le titane, l'argent, le cuivre et l'or.

7. Substrat selon la revendication 6, dans lequel le métal est l'aluminium.

8. Substrat selon la revendication 1, qui comprend en outre un polymère adhérant à la surface du substrat.

9. Substrat selon la revendication 8, dans lequel le polymère est choisi dans le groupe constitué d'un polyester, d'un polycarbonate, d'un polydiméthylsiloxane, d'un polyamide, d'un polyacrylate, d'un polyuréthanne et de mélanges de ceux-ci.

10. Substrat selon la revendication 9, dans lequel le polymère est un polycarbonate.

11. Substrat selon la revendication 1, dans lequel la technique en phase gazeuse excitée est un traitement par décharge couronne.

12. Substrat selon la revendication 1, dans lequel la technique en phase gazeuse excitée est un traitement au plasma.

13. Substrat selon la revendication 1, dans lequel la technique en phase gazeuse excitée est un traitement à la flamme.

14. Substrat selon la revendication 1, dans lequel la technique en phase gazeuse excitée est un traitement à l'ozone.

15. Substrat selon la revendication 1, dans lequel la technique en phase gazeuse excitée est un traitement au plasma dans l'argon et le substrat comprend en outre une couche d'aluminium adhérant à la surface du substrat polymère aromatique hydrogéné.

16. Substrat selon la revendication 1, comprenant en outre une couche métallique adhérant à la surface du substrat polymère thermoplastique aromatique hydrogéné amorphe, dans lequel la couche métallique adhère également à une autre couche de polymère, formant un stratifié thermoplastique aromatique hydrogéné amorphe/métal/polymère.

17. Disque CD audio préparé à partir du substrat de la revendication 1.

18. Disque CD-ROM préparé à partir du substrat de la revendication 1.

19. Disque DVD préparé à partir du substrat de la revendication 1.

20. Disque CD ré-enregistrable préparé à partir du substrat de la revendication 1.

21. Procédé d'augmentation de l'adhérence d'une surface de substrat polymère thermoplastique aromatique hydrogéné amorphe, dans lequel le polymère aromatique hydrogéné est hydrogéné jusqu'à un degré d'au moins 80 pour cent d'hydrogénation aromatique, comprenant le traitement de la surface avec une technique en phase gazeuse excitée, sans utilisation ni production de matières corrosives humides, de manière à obtenir une énergie superficielle critique d'au moins 35 dynes/cm.

22. Procédé selon la revendication 21, dans lequel la technique en phase gazeuse excitée est un traitement par décharge couronne.

23. Procédé selon la revendication 21, dans lequel la technique en phase gazeuse excitée est un traitement au plasma.

24. Procédé selon la revendication 21, dans lequel la technique en phase gazeuse excitée est un traitement à la flamme.

25. Procédé selon la revendication 21, dans lequel la technique en phase gazeuse excitée est un traitement à l'ozone.
